# EUROPEAN PATENT APPLICATION

(11) **EP 4 589 942 A1**
(43) Date of publication of application: **23.07.2025**
(21) Application number: 23864511.3
(22) Date of filing: 08.08.2023
(51) Int. Cl.: H04N 9/73

(54) **COLOR TEMPERATURE ADJUSTING METHOD, COLOR TEMPERATURE ADJUSTING APPARATUS, AND DISPLAY APPARATUS**

(30) Priority: 16.09.2022 CN 202211128072
(71) Applicant: Chipone Technology (Zhuhai) Co., Ltd., Zhuhai, Guangdong 519060 (CN)
(72) Inventor: LIN, Dingjun, Zhuhai, Guangdong 519060 (CN)
(74) Representative: Bals & Vogel Patentanwälte PartGmbB
(86) International application number: PCT/CN2023/111607
(87) International publication number: WO 2024/055777

(57) **Abstract**

The present disclosure discloses a color temperature adjustment method, a color temperature adjustment device, and a display apparatus. The method includes: acquiring an initial color temperature value and a target color temperature value; performing color temperature adjustment according to the initial color temperature value, the target color temperature value, and a pre-fitted color temperature curve, wherein a fitting method for obtaining the color temperature curve includes: defining at least three reference color temperature points to partition a plurality of color temperature ranges; selecting a plurality of intermediate color temperature points within each color temperature range according to a predetermined algorithm, thereby dividing each color temperature range into a plurality of color temperature sub-ranges; fitting the color temperature curve in accordance with the color temperature parameters of the selected intermediate color temperature points and the at least three reference color temperature points being defined. The present disclosure allows for the setting of flexible color temperature ranges and smooth transitions along the color temperature curve without flickering, without the need for high frame rates, and with wide applicability.

## Description

### CROSS-REFERENCE TO PRIOR APPLICATIONS

This application claims priority to Chinese Patent Application No. 202211128072.5, filed on September 16, 2022, titled "COLOR TEMPERATURE ADJUSTMENT METHOD, COLOR TEMPERATURE ADJUSTMENT DEVICE, AND DISPLAY APPARATUS," the entire disclosure of which is incorporated herein by reference, including the entire contents of specifications, claims, drawings and abstracts.

### TECHNICAL FIELD

The present disclosure relates to a field of display technology, and more specifically, to a color temperature adjustment method, a color temperature adjustment device, and a display apparatus.

### BACKGROUND

Color temperature is a performance indicator for televisions. When a light source emits light, it produces a spectrum, and the temperature at which a black body emits the same spectrum is the color temperature of the light source. Almost all televisions on the market have a color temperature adjustment function, typically offering options such as 9000K, 6500K, and 4000K, to meet high-standard operating requirements on color display performance.

Color temperature is a unit of measurement that indicates the color components contained in light. Theoretically, color temperature refers to the color exhibited by an absolute black body when heated from absolute zero (-273°C). As the black body is heated, it changes from black to red, then yellow, white, and finally emits blue light. When the black body is heated to a certain temperature, the spectral composition of the light it emits is referred to as the color temperature of that temperature, measured in units of "K" (Kelvin). If the light emitted by a certain light source has the same spectral composition as the light emitted by the black body at a certain temperature, then the light source is said to have a color temperature of that specific temperature in Kelvin (K).

**In** color temperature adjustment, existing methods use color temperature algorithms to calculate the corresponding color temperature based on the image data to be displayed and perform color temperature transitions based on the calculation results. However, existing transition methods typically use linear interpolation, which cannot follow the color temperature curve and requires a high frame rate to avoid flickering.

Therefore, there is a need to provide an improved technical solution to overcome the above technical problems in the prior art.

### SUMMARY OF THE DISCLOSURE

To solve the above technical problems, the present disclosure provides a color temperature adjustment method, a color temperature adjustment device, and a display apparatus. The present disclosure allows for the setting of flexible color temperature ranges and smooth transitions along the color temperature curve without flickering, without the need for high frame rates, and with wide applicability.

According to a first aspect of the present disclosure, a color temperature adjustment method is provided, and comprises:
acquiring an initial color temperature value and a target color temperature value;
performing color temperature adjustment in accordance with the initial color temperature value, the target color temperature value, and a pre-fitted color temperature curve, wherein a fitting method for obtaining the pre-fitted color temperature curve comprises:
defining at least three reference color temperature points to partition a plurality of color temperature ranges;
selecting a plurality of intermediate color temperature points within each color temperature range according to a predetermined algorithm, thereby dividing each color temperature range into a plurality of color temperature sub-ranges;
fitting the color temperature curve in accordance with color temperature parameters of the selected intermediate color temperature points and the at least three reference color temperature points being defined.

Optionally, selecting a plurality of intermediate color temperature points in each color temperature range according to a predetermined algorithm comprises performing the following operations for each color temperature range:
defining a weight for each intermediate color temperature point within that color temperature range;
calculating the color temperature parameter of each intermediate color temperature point in accordance with the color temperature parameter of the reference color temperature point corresponding to that color temperature range and the weight of that intermediate color temperature point, thereby determining the corresponding intermediate color temperature point in accordance with its color temperature parameter.

Optionally, each color temperature range corresponds to two adjacent reference color temperature points; and defining the weight of each intermediate color temperature point comprises:
within the corresponding color temperature range, defining a first weight of each intermediate color temperature point relative to a first reference color temperature point of the two reference color temperature points corresponding to that color temperature range, and a second weight relative to a second reference color temperature point of the two reference color temperature points corresponding to that color temperature range, wherein the color temperature value of the first reference color temperature point is less than the color temperature value of the second reference color temperature point.

Optionally, a sum of the first weight and the second weight corresponding to each intermediate color temperature point equals 1.

Optionally, the first weight corresponding to each intermediate color temperature point is negatively correlated with a difference between that intermediate color temperature point and the corresponding first reference color temperature point; and the second weight corresponding to each intermediate color temperature point is negatively correlated with a difference between that intermediate color temperature point and the corresponding second reference color temperature point.

Optionally, the color temperature parameter of each color temperature point comprises a red pixel value, a green pixel value, and a blue pixel value; and the red pixel value, green pixel value, and blue pixel value of each intermediate color temperature point each are respectively equal to a sum of: a product of a corresponding color pixel value of the first reference color temperature point of the corresponding color temperature range and the corresponding first weight, and a product of a corresponding color pixel value of the second reference color temperature point of the corresponding color temperature range and the corresponding second weight.

Optionally, the number of intermediate color temperature points selected in each color temperature range is n, the first weight is (n-i+1)/(n+1), and the second weight is i/(n+1), wherein n is a natural number greater than or equal to 1, i is a natural number greater than or equal to 1 and less than or equal to n, and i represents positional information of the corresponding intermediate color temperature point within the corresponding color temperature range.

Optionally, performing color temperature adjustment in accordance with the initial color temperature value, the target color temperature value, and the pre-fitted color temperature curve comprises:
determining the color temperature sub-ranges to which the initial color temperature value and the target color temperature value belong;
obtaining the intermediate color temperature points and the reference color temperature points between the initial color temperature value and the target color temperature value in accordance with the color temperature sub-ranges being determined;
gradually adjusting the color temperature value of the image from the initial color temperature value to the target color temperature value in ascending or descending order in accordance with the obtained intermediate color temperature points and the reference color temperature points, thereby realizing color temperature adjustment along the pre-fitted color temperature curve.

According to a second aspect of the present disclosure, a color temperature adjustment device is provided, and comprises:
a color temperature curve fitting unit configured to fit a color temperature curve in accordance with color temperature parameters of at least three reference color temperature points being defined and a plurality of intermediate color temperature points selected between each two adjacent reference color temperature points;
an acquisition unit configured to acquire an initial color temperature value and a target color temperature value;
an adjustment unit configured to perform color temperature adjustment in accordance with the initial color temperature value, the target color temperature value, and the pre-fitted color temperature curve.

According to a third aspect of the present disclosure, a display apparatus is provided, and comprises the color temperature adjustment device as described above.

The beneficial effects of the present disclosure at least include:
In the technical solution of the present disclosure, by defining at least three reference color temperature points to partition a plurality of color temperature ranges, and selecting a plurality of intermediate color temperature points within each color temperature range according to a predetermined algorithm, the color temperature curve is fitted in advance. This allows subsequent color temperature adjustment to be performed along the pre-fitted color temperature curve, achieving a flicker-free image display effect without the need for high frame rates, thereby greatly improving display quality.

It should be noted that the above general description and the following detailed description are merely exemplary and explanatory and are not intended to limit the present disclosure.

### BRIEF DESCRIPTION OF THE DRAWINGS

FIG. 1 is a flowchart illustrating a color temperature adjustment method according to an embodiment of the present disclosure;
FIG. 2 is a flowchart illustrating a method for fitting a color temperature curve according to an embodiment of the present disclosure;
FIG. 3 is a schematic diagram illustrating specific steps for performing color temperature adjustment according to the pre-fitted color temperature curve according to an embodiment of the present disclosure;
FIG. 4 is a schematic diagram illustrating the color temperature parameters of three defined reference color temperature points and a plurality of selected intermediate color temperature points according to an embodiment of the present disclosure;
FIG. 5 is a schematic diagram illustrating a structure of a color temperature adjustment device according to an embodiment of the present disclosure.

### DETAILED DESCRIPTION

To facilitate understanding of the present disclosure, the following provides a more comprehensive description of the invention with reference to the relevant drawings. The preferred embodiments of the present disclosure are shown in the drawings. However, the present disclosure can be implemented in different forms and is not limited to the embodiments described herein. Rather, these embodiments are provided to make the disclosure of the present disclosure more thorough and complete.

It should be noted that, where there is no conflict, the embodiments and features in the present disclosure can be combined with each other.

The color temperature adjustment method provided in the embodiments of the present disclosure can be applied to any display device with an OLED, LCD, or TDDI driver chip.

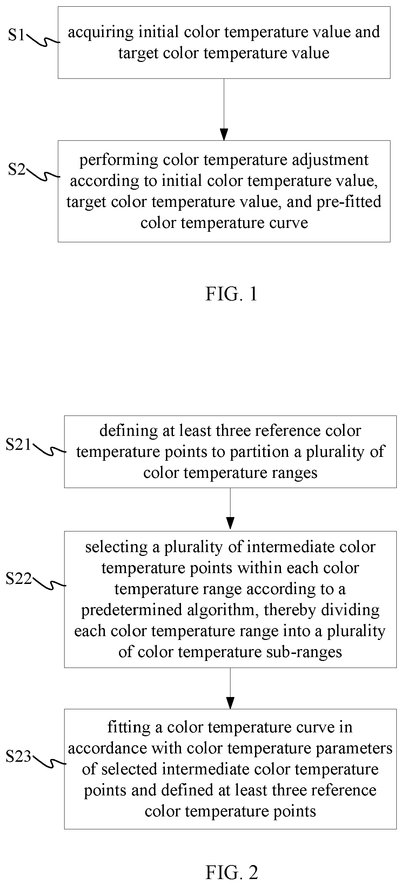

As shown in FIG. 1, the method includes executing steps S1 to S2.

In step S1, an initial color temperature value and a target color temperature value are acquired.

In this embodiment, any existing related method can be used to acquire the initial color temperature value and the target color temperature value. For example, the initial color temperature value can be obtained by reading the current color temperature value of the display device, and the target color temperature value can be obtained by identifying the image information of the image which is to be adjusted and is currently being played, etc., and will not be detailed herein.

In step S2, color temperature adjustment is performed according to the initial color temperature value, the target color temperature value, and the pre-fitted color temperature curve.

Referring to FIG. 2, in this embodiment, the method for fitting the color temperature curve includes executing steps S21 to S23.

In step S21, at least three reference color temperature points are defined to partition a plurality of color temperature ranges.

In this embodiment, at least three color temperature values can be selected within a color temperature adjustment range that can meet most color temperature adjustment needs, to define reference color temperature points, thereby partitioning the entire color temperature adjustment range into multiple color temperature ranges. Each color temperature range corresponds to two reference color temperature points with adjacent color temperature values (including a first reference color temperature point and a second reference color temperature point, where the color temperature value of the first reference color temperature point is less than that of the second reference color temperature point).

Optionally, the lengths of the color temperature ranges can be the same, only partially the same, or entirely different. Additionally, the length of each color temperature range can be flexibly set.

In a preferred example, the defined reference color temperature points should at least include a reference color temperature point corresponding to a low (e.g. the minimum) color temperature value of the color temperature adjustment range, a reference color temperature point corresponding to the midpoint color temperature value of the color temperature adjustment range, and a reference color temperature point corresponding to a high (e.g. the maximum) color temperature value of the color temperature adjustment range.

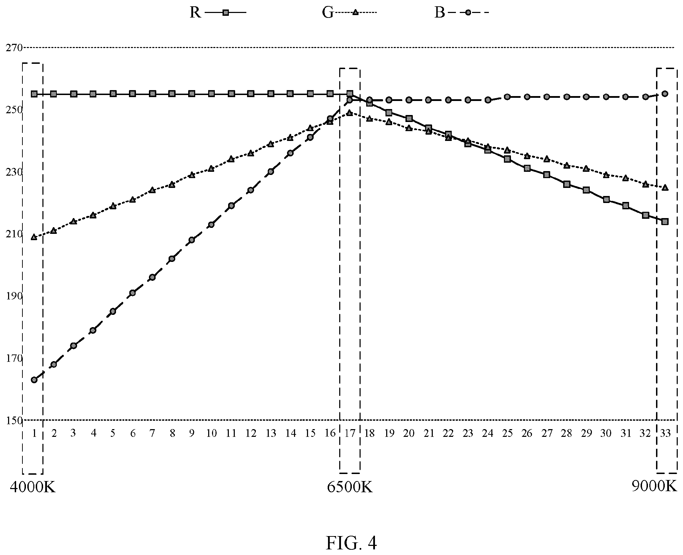

As an example, referring to FIG. 4, this embodiment is exemplified by defining three reference color temperature points to partition the color temperature ranges, but it can be understood that in other embodiments of the present disclosure, more reference color temperature points can be defined to partition more color temperature ranges. It should also be noted that the more reference color temperature points defined, the more color temperature ranges partitioned, and the closer the finally fitted color temperature curve is to the ideal color temperature spectrum curve, i.e., the Planckian black body radiation curve. Consequently, when performing color temperature adjustment according to the pre-fitted color temperature curve, the display effect of the image is better.

As shown in FIG. 4, the three defined reference color temperature points in this example include a warm point, a midpoint, and a cold point. The color temperature value corresponding to the warm point is 4000K, the color temperature value corresponding to the midpoint is 6500K, and the color temperature value corresponding to the cold point is 9000K. Consequently, the color temperature ranges partitioned based on these three reference color temperature points at least include: the range between the warm point and the midpoint (i.e., 4000K~6500K) and the range between the midpoint and the cold point (i.e., 6500K~9000K).

In step S22, a plurality of intermediate color temperature points are selected within each color temperature range according to a predetermined algorithm, thereby dividing each color temperature range into a plurality of color temperature sub-ranges.

In this embodiment, step S22 includes performing the following operations for each color temperature range: defining a weight for each intermediate color temperature point within the color temperature range; calculating the color temperature parameter of each intermediate color temperature point in accordance with the color temperature parameter of the reference color temperature point corresponding to that color temperature range and the weight of each intermediate color temperature point, thereby determining the corresponding intermediate color temperature point in accordance with its color temperature parameter.

Defining the weight of each intermediate color temperature point includes: within the corresponding color temperature range, defining a first weight of each intermediate color temperature point relative to a first reference color temperature point of the two reference color temperature points corresponding to that color temperature range and a second weight relative to a second reference color temperature point of the two reference color temperature points corresponding to that color temperature range.

Preferably, the sum of the first weight and the second weight corresponding to each intermediate color temperature point equals 1.

It can be understood that the color temperature parameter of each reference color temperature point comprises a red pixel value, a green pixel value, and a blue pixel value, and the color temperature parameter of each intermediate color temperature point also comprises a corresponding red pixel value, green pixel value, and blue pixel value. Since each color temperature value uniquely corresponds to a set of red pixel value, green pixel value, and blue pixel value, if the color temperature value corresponding to a color temperature point is known, the red pixel value, green pixel value, and blue pixel value corresponding to that color temperature point can be easily obtained; conversely, if a set of red pixel value, green pixel value, and blue pixel value is determined, the color temperature value corresponding to the color temperature point can be obtained based on the set of red pixel value, green pixel value, and blue pixel value. Therefore, in the embodiments of the present disclosure, selecting a plurality of intermediate color temperature points within each color temperature range involves calculating multiple sets of red pixel value, green pixel value, and blue pixel value within each color temperature range according to a predetermined algorithm and the color temperature parameters of the two reference color temperature points corresponding to each color temperature range, thereby determining a plurality of intermediate color temperature points corresponding to the color temperature range based on the calculated multiple sets of red pixel value, green pixel value, and blue pixel value. For example, selecting n intermediate color temperature points within each color temperature range can divide the corresponding color temperature range into n+1 color temperature sub-ranges, where n is a natural number greater than or equal to 1.

As an example, the red pixel value of each intermediate color temperature point is equal to the sum of the product of the red pixel value of the first reference color temperature point of the corresponding color temperature range and the corresponding first weight, and the product of the red pixel value of the second reference color temperature point of the corresponding color temperature range and the corresponding second weight; the green pixel value of each intermediate color temperature point is equal to the sum of the product of the green pixel value of the first reference color temperature point of the corresponding color temperature range and the corresponding first weight, and the product of the green pixel value of the second reference color temperature point of the corresponding color temperature range and the corresponding second weight; and the blue pixel value of each intermediate color temperature point is equal to the sum of the product of the blue pixel value of the first reference color temperature point of the corresponding color temperature range and the corresponding first weight, and the product of the blue pixel value of the second reference color temperature point of the corresponding color temperature range and the corresponding second weight.

Further, within a color temperature range, the first weight corresponding to each intermediate color temperature point is negatively correlated with the difference between the intermediate color temperature point and the corresponding first reference color temperature point, i.e., the greater the difference between the intermediate color temperature point and the corresponding first reference color temperature point, the smaller the corresponding first weight; the second weight corresponding to each intermediate color temperature point is negatively correlated with the difference between the intermediate color temperature point and the corresponding second reference color temperature point, i.e., the smaller the difference between the intermediate color temperature point and the corresponding second reference color temperature point, the greater the corresponding second weight.

As an example, n intermediate color temperature points are selected within each color temperature range. The first weight corresponding to each intermediate color temperature point is (n-i+1)/(n+1), and the second weight is i/(n+1), where i is a natural number greater than or equal to 1 and less than or equal to n, and i represents the positional information of the intermediate color temperature point within the corresponding color temperature range.

In a further example, referring to FIG. 4, taking n equal to 15 as an example, 15 intermediate color temperature points need to be respectively selected within the color temperature range corresponding to the warm point and the midpoint (i.e., 4000K~6500K), and within the color temperature range corresponding to the midpoint and the cold point (i.e., 6500K~9000K), to further divide each of the color temperature range corresponding to the warm point and the midpoint and the color temperature range corresponding to the midpoint and the cold point into 16 color temperature sub-ranges.

In this example, for the color temperature range corresponding to the warm point and the midpoint, the color temperature value of the first reference color temperature point corresponding to the color temperature range is 4000K, and the color temperature value of the second reference color temperature point corresponding to the color temperature range is 6500K. The first weights of the 15 selected intermediate color temperature points within the color temperature range are respectively 15/16, 14/16, 13/16, 12/16, 11/16, ..., 2/16, and 1/16, and the second weights of the 15 selected intermediate color temperature points within the color temperature range are respectively 1/16, 2/16, 3/16, 4/16, 5/16, ..., 14/16, and 15/16.

Assuming that the red pixel value, green pixel value, and blue pixel value corresponding to the first reference color temperature point of 4000K are 255, 209, and 163, respectively, and the red pixel value, green pixel value, and blue pixel value corresponding to the second reference color temperature point of 6500K are 255, 249, and 253, respectively. According to the predetermined algorithm in this embodiment, for the first intermediate color temperature point (denoted as A1, which is the intermediate color temperature point closest to the first reference color temperature point of the color temperature range, corresponding to i=1) selected within the color temperature range, the red pixel value R101 is 255*15/16+255*1/16=255, the green pixel value G101 is 209*15/16+249*1/16=211.5, and the blue pixel value B101 is 163*15/16+253*1/16=168.625; for the second intermediate color temperature point (denoted as A2, corresponding to i=2) selected within the color temperature range, the red pixel value R102 is 255*14/16+255*2/16=255, the green pixel value G102 is 209*14/16+249*2/16=214, and the blue pixel value B102 is 163*14/16+253*2/16=174.25; and so on, for the 15th intermediate color temperature point (denoted as A15, corresponding to i=15) selected within the color temperature range, the red pixel value R115 is 255*1/16+255*15/16=255, the green pixel value G115 is 209*1/16+249*15/16=246.5, and the blue pixel value B115 is 163*1/16+253*15/16=247.375.

Similarly, in this example, for the color temperature range corresponding to the midpoint and the cold point, the color temperature value of the first reference color temperature point corresponding to the color temperature range is 6500K, and the color temperature value of the second reference color temperature point corresponding to the color temperature range is 9000K. The first weights of the 15 selected intermediate color temperature points within the color temperature range are respectively 15/16, 14/16, 13/16, 12/16, 11/16, ..., 2/16, and 1/16, and the second weights of the 15 selected intermediate color temperature points within the color temperature range are respectively 1/16, 2/16, 3/16, 4/16, 5/16, ..., 14/16, and 15/16.

Assuming that the red pixel value, green pixel value, and blue pixel value corresponding to the first reference color temperature point of 6500K are 255, 249, and 253, respectively, and the red pixel value, green pixel value, and blue pixel value corresponding to the second reference color temperature point of 9000K are 214, 225, and 255, respectively. According to the predetermined algorithm in this embodiment, for the first intermediate color temperature point (denoted as B1, which is the intermediate color temperature point closest to the first reference color temperature point of the color temperature range, corresponding to i=1) selected within the color temperature range, the red pixel value R201 is 255*15/16 + 214*1/16 = 252.4375, the green pixel value G201 is 249*15/16 + 225*1/16 = 247.5, and the blue pixel value B201 is 253*15/16 + 255*1/16 = 253.125; for the second intermediate color temperature point (denoted as B2, corresponding to i=2) selected within the color temperature range, the red pixel value R202 is 255*14/16 + 214*2/16 = 249.875, the green pixel value G202 is 249*14/16 + 225*2/16 = 246, and the blue pixel value B202 is 253*14/16 + 255*2/16 = 253.25; and so on, for the 15th intermediate color temperature point (denoted as B15, corresponding to i=15) selected within the color temperature range, the red pixel value R215 is 255*1/16 + 214*15/16 = 216.5625, the green pixel value G215 is 249*1/16 + 225*15/16 = 226.5, and the blue pixel value B215 is 253*1/16 + 255*15/16 = 254.875.

Preferably, in this embodiment, the red pixel value, green pixel value, and blue pixel value corresponding to each color temperature point are all integer values. Therefore, when the corresponding calculation result is a decimal, it should be converted to the nearest integer value. For example, the calculation result of the blue pixel value of intermediate color temperature point A1, 168.625, should be converted to 168 or 169, and the calculation result of the blue pixel value of intermediate color temperature point A2, 174.25, should be converted to 174 or 175; and the calculation result of the red pixel value of intermediate color temperature point B1, 252.4375, should be converted to 252 or 253, and the calculation result of the red pixel value of intermediate color temperature point B2, 249.875, should be converted to 249 or 250, etc.

Optionally, to ensure the uniformity of the color temperature parameters of multiple intermediate color temperature points, when converting decimal values to integer values, the calculation results of the pixel values of the same color should be converted in the same direction, for example, by discarding the decimal part to round down, or by adding 1 to the integer part to round up. For example, converting 168.625 to 168, converting 174.25 to 174; converting 252.4375 to 252, converting 249.875 to 249, etc.

Using the above method, 15 sets of red pixel value, green pixel value, and blue pixel value can be obtained in the color temperature range corresponding to the warm point and the midpoint, and in the color temperature range corresponding to the midpoint and the cold point, respectively, i.e., 15 sets of color temperature parameters can be obtained in each color temperature range. Through color temperature indexing, 15 intermediate color temperature points located in the color temperature range corresponding to the warm point and the midpoint, and 15 intermediate color temperature points located in the color temperature range corresponding to the midpoint and the cold point, can be obtained.

In step S23, a color temperature curve is fitted in accordance with the color temperature parameters of the selected intermediate color temperature points and the defined at least three reference color temperature points.

After calculating a plurality of intermediate color temperature points in each color temperature range, the color temperature curve can be obtained by nonlinear fitting based on the defined at least three reference color temperature points and the calculated intermediate color temperature points. The more intermediate color temperature points selected in each color temperature range, the closer the finally fitted color temperature curve is to the ideal Planckian black body radiation curve.

It can be understood that the number of intermediate color temperature points selected in each color temperature range in the present disclosure can be completely the same, or not the same or not completely the same. Similar extended embodiments that those skilled in the art can easily think of should also be within the protection scope of the present disclosure.

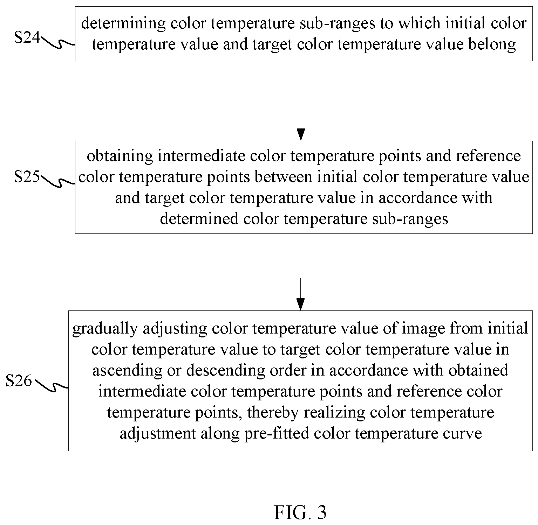

Further, referring to FIG. 3, color temperature adjustment is performed in accordance with the initial color temperature value, the target color temperature value, and the pre-fitted color temperature curve includes executing steps S24 to S26.

In step S24, color temperature sub-ranges, to which the initial color temperature value and the target color temperature value belong, are determined.

In step S25, reference color temperature points and intermediate color temperature points between the initial color temperature value and the target color temperature value, are obtained in accordance with the determined color temperature sub-ranges.

In step S26, a color temperature value of the image is gradually adjusted from the initial color temperature value to the target color temperature value in ascending or descending order in accordance with the obtained intermediate color temperature points and the reference color temperature points, thereby realizing color temperature adjustment along the pre-fitted color temperature curve.

Optionally, the initial color temperature value and the target color temperature value can be indexed to obtain their respective corresponding color temperature parameters, thereby confirming the color temperature sub-ranges to which the initial color temperature value and the target color temperature value belong by comparing with the pre-calculated and stored color temperature parameters of each reference color temperature point and each intermediate color temperature point. Altematively, the color temperature values of each reference color temperature point and each intermediate color temperature point can be pre-calculated and stored, thereby confirming the color temperature sub-ranges to which the initial color temperature value and the target color temperature value belong by comparing the color temperature values. The present disclosure does not limit this.

As an example, through confirmation, assuming that the initial color temperature value is located in the color temperature sub-range corresponding to the 12th intermediate color temperature point (denoted as A12) and the 13th intermediate color temperature point (denoted as A13) within the color temperature range of 4000K~6500K, and the target color temperature value is located in the color temperature sub-range corresponding to the 4th intermediate color temperature point and the 5th intermediate color temperature point within the color temperature range of 6500K~9000K, then the intermediate color temperature points and reference color temperature points between the initial color temperature value and the target color temperature value that can be obtained include: the 13th intermediate color temperature point (denoted as A13), the 14th intermediate color temperature point (denoted as A14), and the 15th intermediate color temperature point (denoted as A15) located in the color temperature range of 4000K~6500K, the reference color temperature point 6500K, and the 1st intermediate color temperature point (denoted as B1), the 2nd intermediate color temperature point (denoted as B2), the 3rd intermediate color temperature point (denoted as B3), and the 4th intermediate color temperature point (denoted as B4) located in the color temperature range of 6500K~9000K. Consequently, when performing color temperature value adjustment, the color temperature value of the image can first be adjusted from the current initial color temperature value to the color temperature value corresponding to the intermediate color temperature point A13, then from the color temperature value corresponding to the intermediate color temperature point A13 to the color temperature value corresponding to the intermediate color temperature point A14, then from the color temperature value corresponding to the intermediate color temperature point A14 to the color temperature value corresponding to the intermediate color temperature point A15, then from the color temperature value corresponding to the intermediate color temperature point A15 to 6500K, ..., and so on, finally gradually adjusting the color temperature value of the image to the target color temperature value, thereby realizing color temperature adjustment along the pre-fitted color temperature curve.

In this embodiment, adjusting the color temperature value involves separately adjusting the color temperature parameters (including red pixel value, green pixel value, and blue pixel value) corresponding to the color temperature value.

It should be noted that the color temperature adjustment method provided by the present disclosure is more easily compatible with the control method of the SWUI (Semantic Web User Interaction) adjustment bar.

In summary, the present disclosure fits the color temperature curve in advance by defining at least three reference color temperature points and selecting a plurality of intermediate color temperature points within each color temperature range, allowing subsequent color temperature adjustment to be performed along the pre-fitted color temperature curve. Since each color temperature adjustment process in this application can transition the color temperature value along the color temperature curve, multiple transitions of the color temperature value can be performed in each frame cycle without causing flickering. Consequently, compared to the method of using linear interpolation for color temperature transition in related technologies, this application requires fewer frames to achieve the same color temperature adjustment, but can achieve a flicker-free image display effect, and even achieve a better flicker-free image display effect, greatly improving display quality.

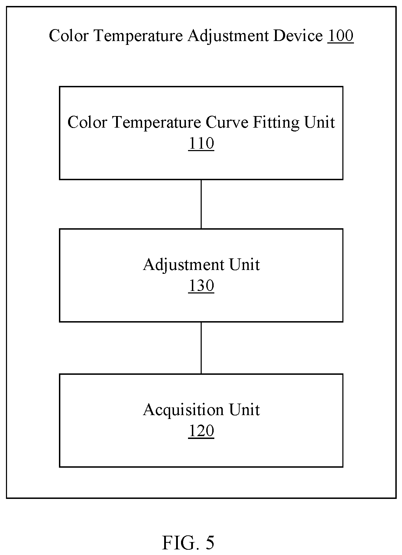

Further, as shown in FIG. 5, the present disclosure also provides a color temperature adjustment device 100, which can implement the color temperature adjustment method as described above. In this embodiment, the color temperature adjustment device 100 includes: a color temperature curve fitting unit 110, an acquisition unit 120, and an adjustment unit 130.

The color temperature curve fitting unit 110 is configured to fit a color temperature curve in accordance with the color temperature parameters of at least three defined reference color temperature points and the color temperature parameters of a plurality of intermediate color temperature points selected between each pair of adjacent reference color temperature points.

The acquisition unit 120 is configured to acquire the initial color temperature value and the target color temperature value of the image to be adjusted.

The adjustment unit 130 is configured to perform color temperature adjustment in accordance with the acquired initial color temperature value, the target color temperature value, and the pre-fitted color temperature curve.

In specific implementations, each module/unit in the color temperature adjustment device can be implemented as an independent entity, or they can be combined in any way to be implemented as one or several entities. At the same time, the specific implementation of each unit/unit in the color temperature adjustment device described above can refer to the embodiments of the color temperature adjustment method described earlier, and will not be repeated here.

The present disclosure also provides a display apparatus, including the color temperature adjustment device 100 as described above.

Optionally, the functions of the color temperature adjustment device 100 can be implemented by at least one of a display driver integrated circuit (DDI), an application processor (AP), and an image processing chip provided in the display apparatus.

It should be noted that, for the system/device embodiments in this specification, since they are substantially similar to the method embodiments, the relevant parts can refer to the description of the method embodiments. Furthermore, it should be pointed out that in the device and method of the present disclosure, it is apparent that each part or each step can be decomposed and/or recombined. These decompositions and/or recombinations should be regarded as equivalent solutions of the present disclosure. Moreover, the steps of executing the above system processing can naturally be executed in the order described in the specification in chronological order, but it is not necessary to execute them in chronological order, and some steps can be executed in parallel or independently of each other. For those skilled in the art, it is possible to understand that all or any steps or components of the method and device of the present disclosure can be implemented in any computing device (including processors, storage media, etc.) or a network of computing devices, in hardware, firmware, software, or a combination thereof, which can be realized by those skilled in the art using their basic programming skills after reading the description of the present disclosure.

Finally, it should be noted that: obviously, the above embodiments are merely examples for clearly illustrating the present disclosure, and are not intended to limit the embodiments. For those skilled in the art, other different forms of changes or modifications can be made based on the above description. It is not necessary to exhaust all the embodiments here. The obvious changes or modifications derived from this are still within the protection scope of the present disclosure.

## Claims

1. A color temperature adjustment method, comprising:
acquiring an initial color temperature value and a target color temperature value;
performing color temperature adjustment in accordance with the initial color temperature value, the target color temperature value, and a pre-fitted color temperature curve, wherein a fitting method for obtaining the pre-fitted the color temperature curve comprises:
defining at least three reference color temperature points to partition a plurality of color temperature ranges;
selecting a plurality of intermediate color temperature points within each color temperature range according to a predetermined algorithm, thereby dividing each color temperature range into a plurality of color temperature sub-ranges;
fitting the color temperature curve in accordance with the color temperature parameters of the selected intermediate color temperature points and the at least three reference color temperature points being defined.

2. The color temperature adjustment method according to claim 1, wherein selecting a plurality of intermediate color temperature points in each color temperature range according to a predetermined algorithm comprises performing the following operations for each color temperature range:
defining a weight for each intermediate color temperature point within that color temperature range;
calculating the color temperature parameter of each intermediate color temperature point in accordance with the color temperature parameter of the reference color temperature point corresponding to that color temperature range and the weight of that intermediate color temperature point, thereby determining the corresponding intermediate color temperature point in accordance with its color temperature parameter.

3. The color temperature adjustment method according to claim 2, wherein each color temperature range corresponds to two adjacent reference color temperature points; and defining the weight of each intermediate color temperature point comprises:
within the corresponding color temperature range, defining a first weight of each intermediate color temperature point relative to a first reference color temperature point of the two reference color temperature points corresponding to that color temperature range, and a second weight relative to a second reference color temperature point of the two reference color temperature points corresponding to that color temperature range, wherein the color temperature value of the first reference color temperature point is less than the color temperature value of the second reference color temperature point.

4. The color temperature adjustment method according to claim 3, wherein a sum of the first weight and the second weight corresponding to each intermediate color temperature point equals 1.

5. The color temperature adjustment method according to claim 3, wherein the first weight corresponding to each intermediate color temperature point is negatively correlated with a difference between that intermediate color temperature point and the corresponding first reference color temperature point; and the second weight corresponding to each intermediate color temperature point is negatively correlated with a difference between that intermediate color temperature point and the corresponding second reference color temperature point.

6. The color temperature adjustment method according to claim 5, wherein the color temperature parameter of each color temperature point comprises a red pixel value, a green pixel value, and a blue pixel value; and the red pixel value, green pixel value, and blue pixel value of each intermediate color temperature point each are respectively equal to a sum of: a product of a corresponding color pixel value of the first reference color temperature point of the corresponding color temperature range and the corresponding first weight, and a product of a corresponding color pixel value of the second reference color temperature point of the corresponding color temperature range and the corresponding second weight.

7. The color temperature adjustment method according to any one of claims 3 to 6, wherein the number of intermediate color temperature points selected in each color temperature range is n, the first weight is (n-i+1)/(n+1), and the second weight is i/(n+1), wherein n is a natural number greater than or equal to 1, i is a natural number greater than or equal to 1 and less than or equal to n, and i represents positional information of the corresponding intermediate color temperature point within the corresponding color temperature range.

8. The color temperature adjustment method according to claim 1, wherein performing color temperature adjustment in accordance with the initial color temperature value, the target color temperature value, and the pre-fitted color temperature curve comprises:
determining the color temperature sub-ranges to which the initial color temperature value and the target color temperature value belong;
obtaining the intermediate color temperature points and the reference color temperature points between the initial color temperature value and the target color temperature value in accordance with the color temperature sub-ranges being determined;
gradually adjusting the color temperature value of the image from the initial color temperature value to the target color temperature value in ascending or descending order in accordance with the obtained intermediate color temperature points and the reference color temperature points, thereby realizing color temperature adjustment along the pre-fitted color temperature curve.

9. A color temperature adjustment device, comprising:
a color temperature curve fitting unit configured to fit a color temperature curve in accordance with the color temperature parameters of at least three reference color temperature points being defined and a plurality of intermediate color temperature points selected between each two adjacent reference color temperature points;
an acquisition unit configured to acquire an initial color temperature value and a target color temperature value;
an adjustment unit configured to perform color temperature adjustment in accordance with the initial color temperature value, the target color temperature value, and the pre-fitted color temperature curve.

10. A display apparatus, comprising the color temperature adjustment device according to claim 9.
